Europäisches Patentamt

European Patent Office

Office européen des brevets

(19)

(11) EP 0 601 304 B1

(12) EUROPEAN PATENT SPECIFICATION

(45) Date of publication and mention
of the grant of the patent:
**27.01.1999 Bulletin 1999/04**

(51) Int Cl.6: **G06F 3/12**, G06K 15/00,
G06F 7/02

(21) Application number: **93116507.0**

(22) Date of filing: **12.10.1993**

(54) **Method and apparatus for detecting bit sequences in data streams**

Verfahren und Anordnung zur Erkennung von Bit-Sequenzen in Datenströmen

Procédé et dispositif de détection des séquences de bits dans les suites de données

(84) Designated Contracting States:
**BE DE FR GB**

(30) Priority: **14.10.1992 US 960953**

(43) Date of publication of application:
**15.06.1994 Bulletin 1994/24**

(73) Proprietor: **Bayer Corporation**
**Wilmington, MA 01887-1069 (US)**

(72) Inventors:
• **Zawojski, Robert**
**Derry, New Hampshire 03038 (US)**
• **Hayford, David A.**
**Unionville, Connecticut 06085 (US)**

(74) Representative: **Strasse, Joachim, Dipl.-Ing.**
**Strasse & Hofstetter,**
**Balanstrasse 57**
**81541 München (DE)**

(56) References cited:
**EP-A- 0 223 458**          **EP-A- 0 408 936**
**EP-A- 0 469 974**          **WO-A-92/04672**

## Description

## BACKGROUND OF THE INVENTION

The general application of the invention is the processing of large data sets represented in a file or transfer medium made up of a sequence of data bytes conforming to a hierarchy of syntax rules. As used herein the term "byte" represents a quantum of binary digits ("bits") appropriate to the application. For example, an application processing standard ASCII text uses 7- or 8-bit data bytes conforming to the American Standard Code for Information Interchange (ASCII).

The structure of such a data set (referred to herein for convenience as a "data stream") is made up of content data together with formatting information which control processing and presentation of the data. The formatting information is identified within the data stream by sequences of one or more data bytes ("multi-byte sequences") which must be identified within the total sequence of bytes. When so identified, a special byte sequence must be analyzed in context to verify that it is indeed a formatting indicator, and that it conforms to the predefined syntax. For example, a data stream representing lines of ASCII text contains data bytes representing the text content of each line followed by a one or two- byte special byte sequence indicating the end of the line and beginning of the next. In the text data stream, the data bytes coded according to the ASCII standard are referred to as "ASCII characters", or merely "characters". The two-byte sequence used traditionally for this low-level structural definition is the ASCII "return" character followed by the "newline" character, as a holdover from the mechanical typewriter / teletype era when a new line operation required a carriage return and line feed as successive mechanical control operations. Early text processing equipment implementing this convention involved paper tape in which content characters punched were followed by the control characters which operated the carriage and platten controls at the end of each line. In punched paper tape technology, each byte in the total data stream was necessarily read sequentially and fully processed as read.

As digital data processing became available, parallel and / or asynchronous processing of data became possible through, for example, recirculating memories used for a Cathode Ray Tube (CRT) refresh buffer. Such a memory would contain a subset of data (a "buffer") in which all data bytes in the buffer were repeatedly scanned in sequence and individual special data bytes identified by data flags set at each time slice ("memory clock cycle"). For a CRT display of ASCII text, the buffer would be scanned continuously and processed by digital logic circuitry with every complete scan as required to update the transient CRT image. In this example, the occurrence of an ASCII return character in one memory clock cycle followed by the occurrence of a newline character in the next would be used by a digital logic circuit to indicate a line ending, and appropriate signals would be sent to control the processing and display system.

With the advent of page description languages such as PostScript (a trademark of Adobe Systems, Inc.), very large data streams of structured data have become commonplace. This data is typically created by computer programs to represent output "documents", and is sent through a network or other transfer medium from the originating computer to a Raster Image Processor (RIP) for interpretation and production of the on-off sequence of control signals (the "raster") required by a marking device such as a laser printer or film recorder. As in the simpler examples described above, formatting and structural information must be extracted by the processing system from the data stream using special character sequences which may in general occur at any point in the data stream. Moreover, abstraction of function in the processing environment, reflecting the hierarchical organization of the data, may require more than a single character-by-character scan from beginning to end through the data in order to carry out all processing. This is the case, for example, with the processing of a PostScript data stream by a RIP containing a spooler / printer preprocessor, which uses PostScript "comments" conforming to a high-level syntax and conventions to infer the structure of the document.

In the PostScript language, comments are introduced by the ASCII character "%", and consist of all characters between the "%" character and the end of the line (see "PostScript Language Reference Manual", by Adobe Systems, Inc., published by Addison-Wesley, also known as the "Red Book"). Special comments are used to indicate document structure according to industry standard conventions. These are introduced by the two-character sequences "%%", "%!" and "%?". Since files of tens of megabytes can be required to represent the data, the time required to scan such data files to locate the two-character sequences can be substantial. Even though the document structuring conventions could require that the comments be located in a known place within the data stream (e.g., at the very beginning), the hierarchical organization of a PostScript data file makes it possible that they could occur well within the body of a file representing a complex document (e. g., separate pages containing 10 Megabyte images).

For the typical case in which the occurrence of special character sequences is relatively rare, substantial processing efficiency (i.e., reduced processing time) could be achieved if their detection were separated from the time-consuming task of contextual evaluation and syntax verification. In such case, the entire data stream could be monitored during normal processing, but the time-consuming evaluation task could be avoided except for relatively small subsets of the data in the vicinity of the detected special character sequences.

An additional problem associated with the searching of character sequences in large data files is the fact that the data is transferred to various stages of processing as relatively small subsets retained in buffers long enough for processing or transfer. Accordingly, each buffer represents a data block which is processed by itself, even though a special character sequence can in fact span such data blocks, with the beginning of the sequence occurring in one data block, and the remainder of the sequence in the next. This fact requires that even with contuous monitoring, only a single data block is seen at a time, and additional state information must be preserved from the search of one data block to the next.

It is accordingly a general object of the invention to permit processing of data streams (data files) of arbitrary size, containing any distribution of the desired character sequences, with reduced processing time.

It is a specific object of the invention to allow identification of data subsets (data blocks) containing the special multi-byte character sequences through continuous monitoring of normal transfer of data from one point in a spooling / print managing Raster Image Processing system to another.

It is a further specific object of the invention to permit detection of special multi-byte character sequences spanning data blocks, i.e., for which the beginning of a sequence to be detected is in one data block and the remainder of the sequence is in the following data block.

It is a still further specifc object of the invention that the character monitoring process achieved by the invention adds minimal processing overhead to the routine transfer of data across the data channel to be monitored.

It is a feature of this invention to permit use of the monitored data channel by several types of data, with self-identification of the data to be monitored for special character sequences. This feature allows a single data bus in the processing system to be used for several purposes in an interleaved fashion without the additional processing overhead.

Related prior art may be found in EP 0 223 458, in which an apparatus for digital filtering of sequences of data units, such as sequences of bytes, is described. The apparatus provides for the parallel application of more than one filter and stores the results of applying all filters to a whole sequence of data units. The apparatus involves the interaction of random access memories, hence, filters are programmable. In addition, individual data units in a sequence may be trapped for comparison solely as a function of their ordinal position in the sequence.

Further, in WO 92/04672 a method and system is described for matching the software command language of a computer with the printer language of a printer wherein the nature, character and frequency of a stream of data generated from computer software is sensed to determine the particular command language in which the computer is operating. In response to this sensing function and in the detection of the presence or absence of certain preselected ASCII characters with a predetermined number of characters initially scanned, an automatic selection is made between the computer or computer work station and either one of a plurality of available printers operating in this same language or to a correct printer language conversion within a single printer. In this manner, manual language matching keycap selection and problems associated therewith at the computer keyboard are eliminated.

From EP 0 469 974 a printer is known which receives from a host computer through a part print jobs encoded in any one of several printer control languages. The printer comprises a printer controller and has the capability of interpreting print jobs in each printer control language. The printer samples a portion of each print job and, using a resident algorithm and data sets obtained by statistical techniques, analyzes the sampled portion of the print job to identify the printer control language in which the print job is encoded.

## SUMMARY OF THE INVENTION

According to the invention the above problem is solved by an apparatus with the features of claim 1 and a method with the features of claim 12.

The invention makes use of the fact that data transfers from an originating application as described previously take place, as a matter of course, one buffer at a time as the data is processed by network and receiving processing stations. During one of these pre-existing buffer transfers, a logic circuit compares the electrical signals corresponding to the bit pattern of each 8-bit byte transferred to that of the data bytes being searched. If the initial byte of the special byte sequence is found, the logic circuit compares each following character in succession to the corresponding bit pattern required by the special multi-byte sequence. A status register is set during this scanning process indicating detection of one of a given set of special byte sequences. An incomplete special byte sequence detected at the end of the buffer is indicated as well to enable detection of the remainder of the sequence, if present, in the following buffer transfer.

The software which is responsible for detection and processing the special multi-byte sequences of interest evaluates the status register at the end of each buffer transfer, and takes action according to one of the following conditions:

(a) No flag has been set, indicating that no special byte sequences have been identified, in which case byte-by-byte scanning of the data may be bypassed completely and the next transfer initiated.

(b) One or more flags have been set indicating the detection of a complete special byte sequence, in which case the data must be scanned for syntax evaluation and verification that a special byte sequence has indeed been found.

(c) A flag has been set indicating that the beginning of a sequence has been detected but not its completion. For sequences of n bytes where n is greater than 1, the last n-1 bytes of the data transfer must be retained by the software for use with processing the following block according to cases (a) or (b) above.

(d) Both cases (b) and (c) have occurred.

Additional state variables can be set and retained from one buffer transfer to another, potentially requiring the partial or complete scanning of subsequent buffers (not containing the special byte sequences) for full verification of syntax, and processing of the content information represented.

The digital processing circuitry required to perform the data monitoring according to the method of the invention operates completely in parallel with the actual transfer of data, requiring no additional data bus clock cycles while data is being transferred, and only requires that the flags be reset after power-on or after a match occurs. Accordingly, the time required for detection and evaluation of the special byte sequences is effectively reduced by the the ratio of the number of buffers for which no detection occurs to the total number of buffers transferred for the file. The acceleration of processing speed achieved by this method therefore depends upon the sin of the buffers used for the data transfer, and the relative occurrence of the special byte sequences being searched.

## BRIEF DESCRIPTION OF THE DRAWINGS

The objects and features set forth above and other objects and features of the invention will best be understood from a detailed description of a preferred embodiment thereof, selected for purposes of illustration and shown in the accompanying drawings in which:

FIGURE 1 illustrates a prior art apparatus for detecting and processing special character sequences using a shift register recirculating memory and associated digital logic;

FIGURES 2, 2a, 2b and 2c, respectively, illustrate the digital logic associated with processing of one-, two- and three-character sequences in the system of FIGURE 1;

FIGURES 3, 3a and 3b are block diagrams of an embodiment used in detection and evaluation of document structuring comments by a Raster Image Processor containing a spooler / print manager preprocessor;

FIGURE 4a illustrates the monitoring and decoding of data on the data bus and its subsequent processing;

FIGURE 4b illustrates the monitoring and comparison of data on the data bus and its subsequent processing;

FIGURE 5 illustrates the logic circuitry used in the preferred embodiment of the invention for character sequence detection and resultant status register values;

FIGURE 6 is a processing logic flowchart for the comment processing software used in the preferred embodiment of the invention; and,

FIGURE 7 is a graph showing the processing speed improvement factor, achieved by the invention, for PostScript document structuring comment searching, as a function of the relative number of blocks containing such comments.

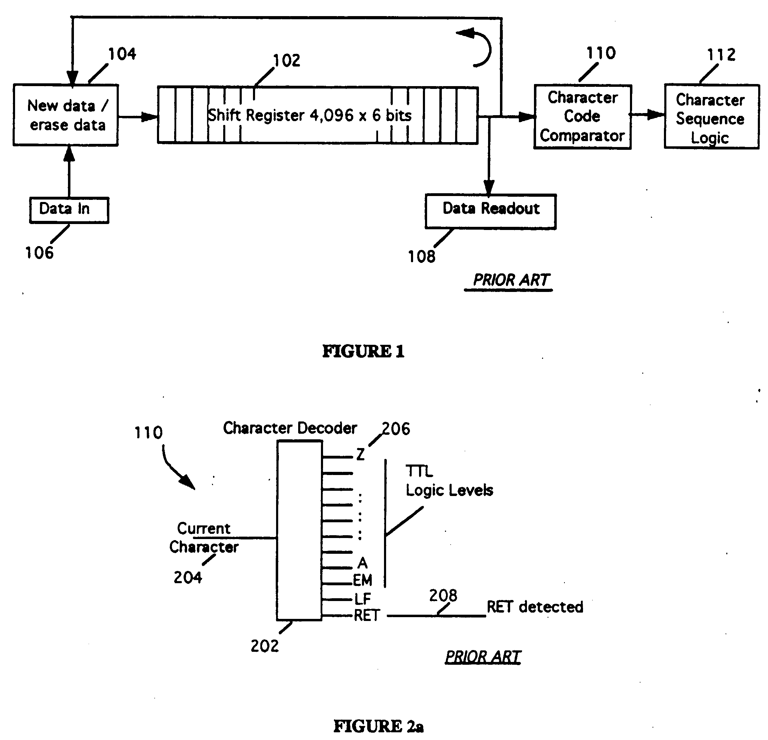

In FIGURE 1, a traditional system used for detection and processing of an end of line character sequence in a 1960's era digital typesetting system is shown. A shift register recirculating memory 102 contains a sequence of 6-bit characters in the order to be processed, with a module 104 controlling input 106 of new characters to the sequence as well as the deletion of characters already present in the sequence in the recirculating path. The data circulate continually, at the rate of one character per clock cycle moved past a data readout module 108 and a character code comparator module 110. Within each character time (clock cycle), the character code comparator 110 uses digital logic to compare the current data character code with each of a stored set of codes, and to activate processing logic 112 for any match obtained.

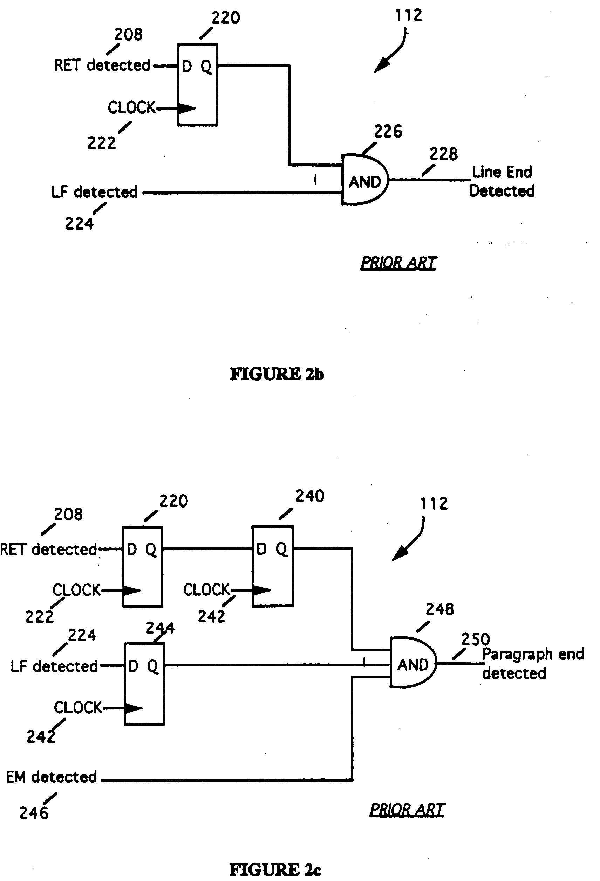

In FIGURE 2a, a detail of the character code comparator logic 110 of FIGURE 1 is shown. A character decoder 202 examines each current character 204, and decodes the electrical signal representing the bits making up the character (6 bits in the example), comparing them with the equivalent signal patterns representing all characters 206 of interest to the system. A match for any of the characters 206 causes the corresponding logic level to be set to "true". For TTL logic, the "true" state is herein taken to be a "high" voltage level. Logic values conforming to these rules are shown symbolically as an uppercase name without a trailing underscore if they are "true" when "high". Those with an uppercase name followed by a trailing underscore are "true" when "low". In the example, a match is shown for the return character (RET) and the corresponding logic level 208 is high ("RET detected").

In FIGURE 2b, the logic required for detection of a two-character sequence (return followed by line feed) is shown. The logic level corresponding to RET detected 208 is "saved" in a flip flop register 220. In the following clock cycle **222** the logic level corresponding to LF detected **224** is compared with this "saved" value in an AND gate **226**. Both values are logically high (true) only if the return-line feed sequence has occured, indicating the condition Line End detected **228**.

In **FIGURE 2c**, the logic of **FIGURE 2b** is extended to a three-character sequence corresponding to the end of a paragraph: return - line feed - "EM" space. The return detected signal **208** is saved for one clock cycle **222** in flip flop **220** and the next in flip flop **240**. The line feed character detected in the following clock cycle **242** is saved in flip flop **244**. The EM character detected **246** signal is AND'ed with "RET", delayed by 2 clock cyles and "LF", delalyed by 1 clock cycle using AND gate **248**. If all three signals are high (true), then the paragraph end detected condition **250** is set.

## DETAILED DESCRIPTION OF THE PREFERRED EMBODIMENT

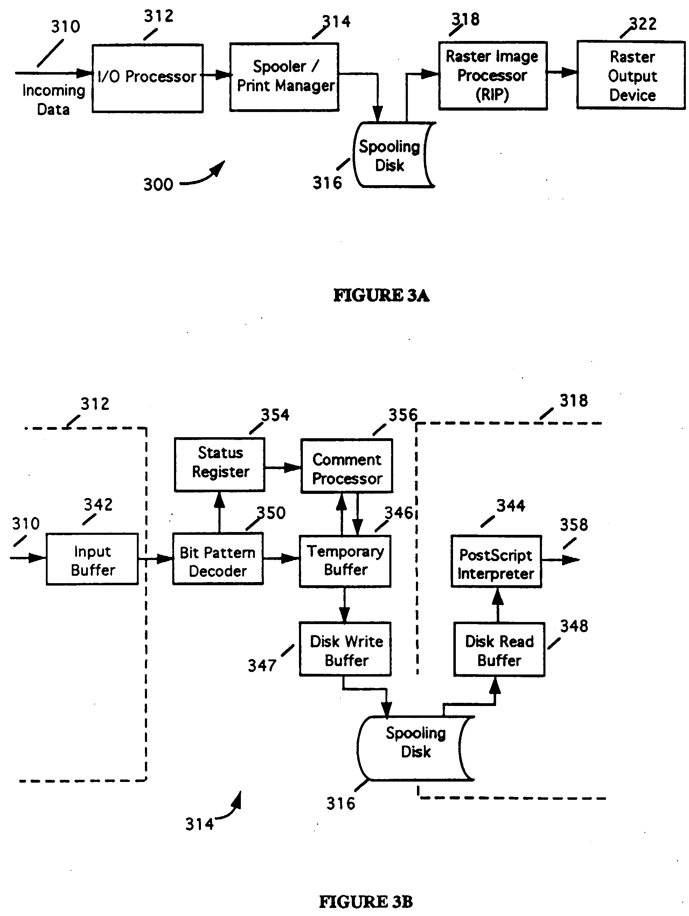

Referring to the drawing of **FIGURE 3a**, an originating data source creates a program such as a PostScript program defined previously, describing a document made up of page descriptions and / or images, and possibly containing PostScript comments to be used purely for information purposes and/ or to be used to describe the structure of the document. The PostScript program is transferred to a processing system **300**, in which the incoming data **310** is first received by an input/output processor **312**, passed to a spooler / print manager module **314**, and then processed by a Raster Image Processor (RIP) **318** and output as rasterized data **320** to a raster output device **322** such as an imagesetter or film recorder. The spooling function of the spooler / print manager **314** is to allow asynchronous input of data and processing by the RIP **318**, by saving the incoming data to a spooling disk **316** for later reading by the RIP **318**. The print manager functions are controlled by document structuring comments, as described previously, which are contained within the data stream **310**.

In **FIGURE 3b**, a detail of the Spooler / Print manager **314** is shown. The incoming data **310**, which can be many tens of megabytes in size, is transferred one buffer at a time to a receiving buffer **342** in the Input / Output processor module. From here it is written to disk **316** for storage until processed by the PostScript interpreter **344**. Since the PostScript interpreter **344** processes the program at a different rate from that associated with the spooling disk data transfer, another buffer **348** must be used by the interpreter for later asynchronous processing by the interpreter **344**.

The modules making up the embodiment of the invention are located in the data transfer path between the input buffer **342** and the disk writing buffer **347** in such a manner that all data passing along this path can be monitored by a Bit Pattern Decoder **350** which captures the electrical signal corresponding to the sequence of data bits representing each successive ASCII character making up the data stream. This decoder **350** is a logic circuit which provides a unique output for each possible input code value. A pattern decode corresponding to detection of characters making up any of the sequences to be detected causes a 4-bit status register **354** to be set with an appropriate value. The high order bit (bit 4) of this register is always set if the current character being processed is an initial "%" (possibly indicating the beginning of a sequence "% %", "%!" or "%?") and reset otherwise.

At the end of the transfer of each data buffer, the status register **354** contains values to be interpreted as follows:

(a) A value of 0 indicates that none of the special character sequences or end of buffer condition were detected in the data buffer.

(b) Values corresponding to setting of bits 1,2 or 3 indicate detection of the complete character sequences "%%", "%!", or "%?" respectively.

(c) Values with bit 4 set indicate that the last character of the buffer is a "%" character, possibly signalling the beginning of a two character sequence to be completed in the next buffer.

(d) All combinations of bit values are possible, indicating 16 independently possible conditions (e.g., a register value of 13 indicates that "%%" and "%?" have been detected in the buffer, and that the last character of the buffer is "%").

After completion of a data transfer to the temporary buffer **346**, the comment processor **356** uses the value in the status register **354** to determine whether a character-by-character scan of the data in the buffer **346** is required to detect and evaluate document structuring comments. If the status register **354** contains values corresponding to bits 1, 2, or 3 set, indicating the detection of the "%%", "%!", or "%?" sequences respectively, the comment processor **356** sets a software switch which causes it to scan the data now present in the temporary buffer **346** character-by-character, to extract the comment information from that buffer before the data stream is written to disk **316** by means of data write buffer **347** for input to the PostScript Interpreter **344** through read buffer **348**. If bits 1, 2 and 3 of status register **354** are 0, no comment has been detected in this last data transfer, and the data in the disk buffer **346** is written to disk **316** with no further processing before input to the PostScript Interpreter **344**, thereby saving the processing time required to scan character by character.

If bit 4 of the status register **354** is set at the end of the transfer, the last character of the buffer was found to be "%", and the detection of a document structuring comment in the next buffer depends upon the first character of that buffer.

Before beginning the next data transfer, the comment processor **356** resets bits 1, 2, and 3 of the status register **354** for the next buffer to 0. Bit 4 is retained as a beginning of sequence indicator as if processing the previous buffer.

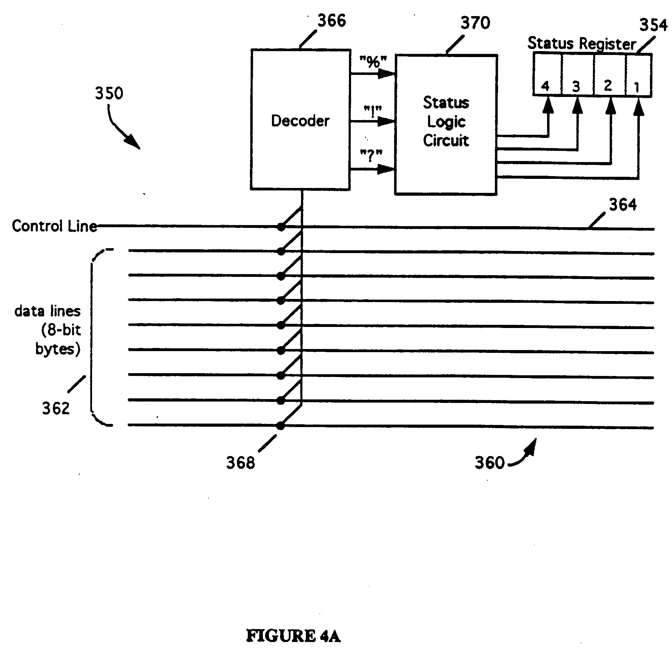

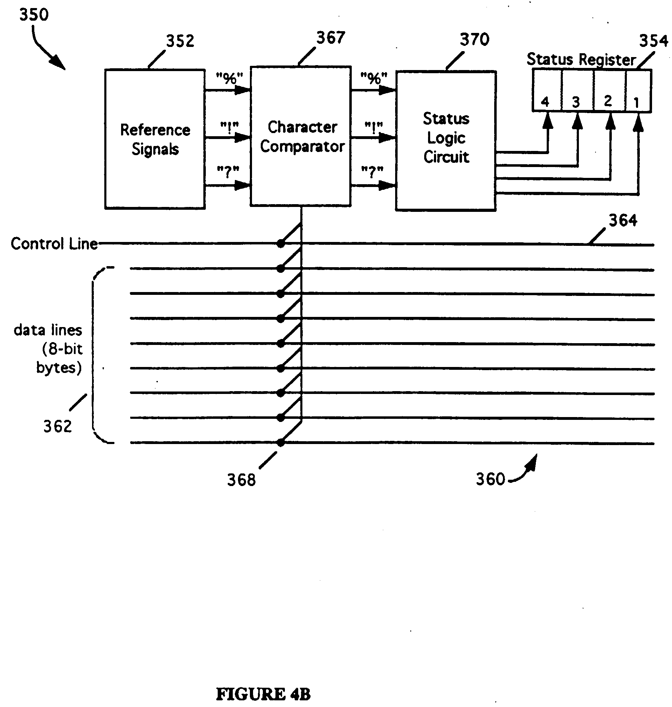

**FIGURE 4a** shows a more detailed view of the Bit Pattern Decoder **350** of **FIGURE 3** in schematic form. The central data path **360** employed within the RIP data system contains 9 lines, of which 8 are used as data lines **362**, and the ninth as a control line **364**. In the simplified view of Figure 4, the control line 364 represents the appropriate decode of address and control signals. It should be understood that the term "data path" as used herein refers to data, control and address lines. The control line **364** is low (logical 0) during transfers on the bus for which no monitoring, is to take place, and high (logical 1) when monitoring is to take place. The signal decoder **366** is constantly reading all nine lines, but takes no action unless the control line **364** is high. Decoder **366** decodes an indication of "%", "!", or "?" that is processed by a status logic circuit **370** to set one or more of the 4 bits of the status register **354** as follows:

(a) If a character "%" is detected and bit 4 of the status register **354** is 1, then the character of the previous clock cycle was a "%" character, and the current character is the final character of a "%%" sequence. Bit 4 of the status register **354** remains set to 1 and bit 1 is set.

(b) If a character "%" is detected and bit 4 of the status register **354** is 0, then the character of the previous clock cycle was not a "%" character and the current character could be the initial character of a two character sequence. Bit 4 of the status register **354** is set to 1 reflecting this condition.

(c) If the characters "!" or "?" are detected and bit 4 of the status register **354** is 1, then the previous character was a "%" character, and the current character is the final character of a "%!" or "%?" sequence. Bit 4 is of status register **354** is reset to 0 and bit 2 or 3 set to 1 accordingly.

(d) If the characters "!" or "?" are detected and bit 4 of the status register **354** is 0, then no sequence is in process and they are ignored. The status register **354** remains unchanged.

It will be appreciated that another embodiment shown in **FIGURE 4b** can utilize a comparator **367** instead of a decoder. In each instance, the data stream is evaluated for the presence of the multi-byte sequence. The comparator **367** compares the signals on data lines **362** with reference signal patterns **352**. However, no action is taken unless control line **364** is high.

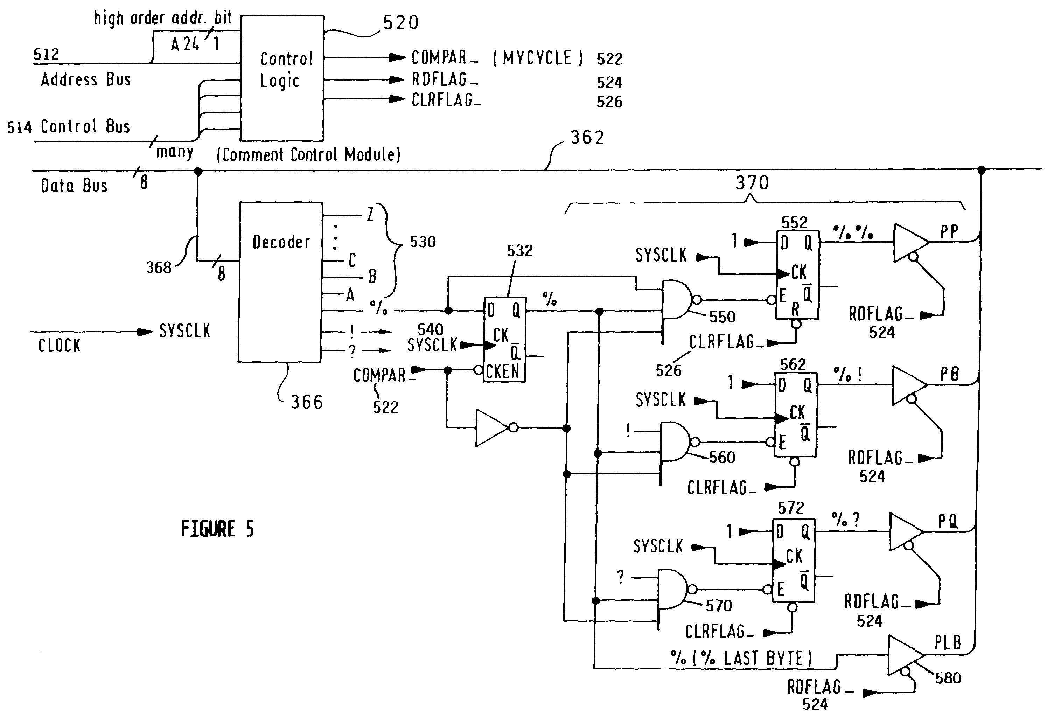

**FIGURE 5** shows a detail of the digital logic circuitry **350** which implements the Signal Decoder **366**, the Status Logic Circuit **370**, and the status register **354** of **FIGURE 4**. IN this example, the combined system bus **510** is made up of the 8-line data bus **362**, an address bus **512** and a control bus **514** controlling many functions, including those related to the invention.

The high-order address bit (of the 24-bit address word) is used as the control line **364** of **FIGURE 4**, effectively creating a pseudo "address-space" for data which is to be monitored by the invention mirroring that of data which is to be transferred without monitoring. The comment control module **520** uses the control and address bus lines to generate the signals COMPAR_ **522** , RDFLG_ **524** amd CLRFLG_ **526** to be used as described below.

The eight-bit data bus **362** is sampled continuously by eight lines **368** input to the decoder module **366**, which compares the incoming bit patterns with those stored for the special characters of interest **352**, consisting of "%","!","?" in addition to other ASCII text characters **530**. A new character appears at the decoder in every character clock cycle time as synchronized by the SYSCLK signal **540**. The current character corresponds to the latest cycle. The COMPAR_ signal **522** is used to control the individual element functions by enabling or disabling flip flops, and as a required value in AND operations.

If the previous character was "%", it appears at the output of flip flop **532**, and is AND'ed with the current character outputs for "%", "!" and "?" in gates **550**, **560** and **570** respectively. These gates detect the corresponding sequences "%%", " %!" and "%?" provided that the COMPAR_ signal **522** is low (true). The outputs of gates **550**, **560** and **570** are stored in the flip flops **552**, **562** and **572** respectively. These three flip flops comprise bits 1, 2 and 3 of the output status register **354** and may be read at any subsequent time under control of the RDFLAG_ signal **524**. The "%%" sequence causes the Bit 1 output **554** to be set, the "%!" sequence causes the Bit 2 output **564** to be set, and the "%?" sequence causes the Bit 3 output **574** to be set.

In any clock cycle, the signal PREVIOUS% **536** appearing at the readout buffer **580** is true if the previous character was "%" and false otherwise. Therefore, if the RDFLAG_ signal **524** is given at the end of the last character transferred, Bit 4 will be found to be set only if the last character was a "%" character. The other bits, controlled by flip flops **552**, **562** and **572** retain their output signals during the entire transfer process, ensuring that each bit is set independently and retained if at least one occurrence of the corresponding sequence has been detected.

The flip flops **552**, **562** and **572** are reset by the CLRFLG_ signal **526**, which is issued by the control logic **520** at the beginning of the next transfer. The flip flop **532** representing Bit 4 is not reset by CLRFLG_ signal **526**, however, thus allowing the search to continue in the next block transfer.

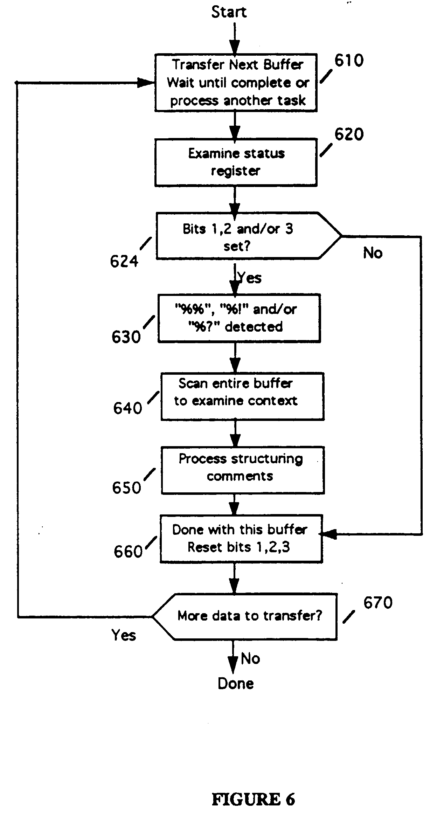

In **FIGURE 6**, a data processing flowchart is shown for the comment processor **356** of **FIGURE 3b**. The processor operates in a continous loop after starting a transfer until done (all data has been transferred). During each buffer transfer (box **610**) the processor must wait until the transfer is complete or process another task asynchnronously. The completion of the transfer is signalled by the mechanism performing the transfer, independently of the invention.

After completion of the transfer, the processor must first examine the status register **354** (box **620**), and check to see if any of the bits 1, 2, or 3 are set corresponding to the conditions previously described (test **624**). If any are set, then at least one of the indicated sequences has been detected (box **630**), and the entire buffer must be scanned, character by character, to determine the context within which the sequence(s) have been detected (box **640**). As a result of this scan, the sequences may indicate valid document structuring comments, coincidental occurrences in another context, or syntax errors. If valid, the operations indicated by the comments are carried out (box **650**). After this processing, the temporary buffer 346 is transferred to the disk write buffer 347, and setup for the next transfer accomplished (box **660**).

If none of the bits 1, 2, or 3 are set (test **624**), the data can be written to disk (box **660**) without further processing by the comment processor. At this point, if this is not the last buffer in the total data transfer (test **670**), the process repeats again (box **610** and following), otherwise, exit is taken from the loop and the processing is done.

The processing software is not required to examine bit 4 of status register **354**, since the condition flagged by that bit, a "%" as the last character of the buffer, is only significant in the processing of the following buffer. In the event that the first character of the following buffer is a "%", "?" or "!", bits 1,2 or 3 will be set when the loop operates on that buffer. This is true for the PostScript example described above in connection with the preferred embodiment. In other cases, the validity of a byte sequence to be detected may depend upon its context within the data preceding the sequence as well as following it. In the case of PostScript comments, only the trailing context need be examined, provided that any state-dependent information required to determine validity may be maintained independently or derived from information in the buffer in which the sequence is detected and scanned character-by-character. A consequence of this requirement is that the buffer sin must be 65,536 Bytes or larger, to enable verification of the fact that the two-character sequences detected by the method are not coincidental occurrences within a valid PostScript character string (whose length is limited to 65,536 characters).

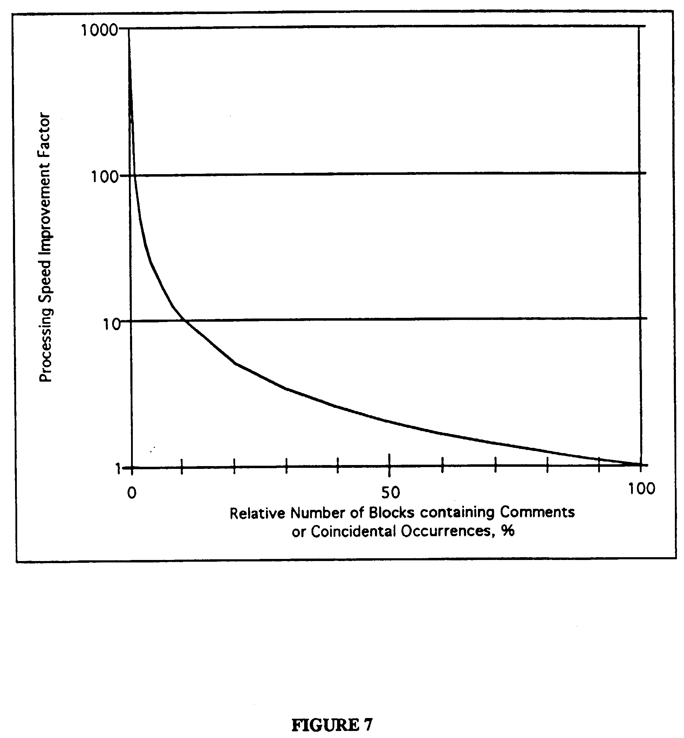

In **FIGURE 7**, the improvement factor $I$ for the preferred embodiment is shown as a function of the relative number of blocks (data segments transferred at once) containing at least one structured comment sequence.

The factor $I$ is obtained according to the following equation:

$$I = \frac{(t_2 N_T + t_s N_T)}{(t_1 N_T + t_s N_B)} \quad [1]$$

where: $t_1$ and $t_2$ are the transfer times per data block with and without using the method of the invention respectively, $t_s$ is the time required for a character-by-character scan of a block of data for comments (in software), $N_B$ is the number of blocks for which a comment or coincidental occurrence is detected according to the method, and $N_T$ is the total number of blocks transferred. As a result of the parallel processing nature of the invention, the times $t_1$ and $t_2$ are essentially equal. In the preferred embodiment, the size of the data blocks transferred are in excess of 65,536 Bytes as indicated previously, to ensure that "non-comment" character sequences are not hidden in PostScript strings which are contained in or span data blocks. Accordingly, it can be assumed that $t_s$ is much greater than $t_1$ or $t_2$, with the result that equation [1] reduces to:

$$I = \frac{N_T}{N_B} \quad [2]$$

The form shown in **FIGURE 7** corresponds to the inverse relationship of equation [2].

### Claims

1. An apparatus for detecting at least one set of multi-byte sequences in a data stream, with each set of multi-byte sequences having predetermined sequences of n-bit bytes, said data stream transferring data from one location to another location over a data path (360) having n data lines (362) with one data line for each bit in an n-bit data byte, said apparatus comprising:

   (a) means for monitoring and continuously evaluating (366; 352, 367) the signal pattern on the n data lines (362) existing at each data byte transfer cycle time for the bit sequences for each n-bit byte of said predetermined sequences of n-bit bytes in each set of multi-byte sequences, said monitoring and evaluating means (366; 352, 367) operating without affecting the transfer of data on said data path (360); and,
   (b) utilization means (370, 354) responsive to the result of at least two evaluations performed by said monitoring and evaluating means (366; 352, 367) at successive data byte transfer cycle times, said utilization means (370, 354) including means for generating (370) a status flag that is reset at the beginning of each transfer with the status of the flag representing the evaluation of the presence or absence of any of said predetermined sequences of n-bit bytes in each set of multi-byte sequences in the data stream.

2. The apparatus of claim 1 wherein said monitoring and evaluating means includes a comparator (367).

3. The apparatus of claim 2 wherein said comparator (367) compares the signal pattern on the n data lines (362) existing at each data byte transfer cycle time with previously stored reference signals (352) corresponding to the bit sequences for each n-bit byte of said predetermined sequences of n-bit bytes in each set of multi-byte sequences and wherein said comparator (367) performs at least two comparisons at successive data byte transfer cycle times and wherein said utilization means (370, 354) is responsive to the result of at least two said comparisons.

4. The apparatus of claim 1 wherein said monitoring and evaluating means includes a decoder (366).

5. The apparatus of claim 4 wherein said decoder (366) receives the signal pattern on the n data lines (362) existing at each data byte transfer cycle time and if said signal pattern corresponds to a bit sequence of n-bit byte of said predetermined sequences of n-bit bytes in each set of multi-byte sequences said decoder (366) generates a corresponding signal to said utilization means (370, 354).

6. The apparatus of claim 1 wherein said data path has n+1 lines with n lines (368) used for the transfer of data and the additional line (364) comprising a control signal line, said apparatus further comprising means for selectively enabling and disabling (520) said monitoring and evaluating means (366; 352, 367) in response to a control signal on said control signal line (364).

7. The apparatus of claim 1 wherein said data stream transfers data in blocks of data with each block having sequential segments of data bytes transferred one after the other.

8. The apparatus of claim 1 wherein said data stream transfers data in blocks of data with each block having sequential segments of data bytes transferred one after the other, said utilization means (370, 354) including means for detecting the presence of a beginning portion of said predetermined sequences of n-bit bytes in a set of multi-byte sequences occurring at the end of one data block and the presence of the remaining portion of the predetermined sequences of n-bit bytes in the set of multi-byte sequences occurring at the beginning of the next successive data block.

9. The apparatus of claim 1 wherein said data comprises text and wherein said monitoring and evaluating means (366; 352, 367) evaluates the data stream of text for the presence of predetermined sequences of n-bit bytes representing characters of text.

10. The apparatus of claim 9 wherein said monitoring and evaluating means (366; 352, 367) evaluates the data stream of text for text sequences of two characters in length.

11. The apparatus of claim 10 wherein said monitoring and evaluating means (366; 352, 367) evaluates the data stream of text for the two character text sequences of "%%", "%!", or "%?".

12. A method for detecting at least one set of multi-byte sequences in a data stream, with each set of multi-byte sequences having predetermined sequences of n-bit bytes, said data stream transferring data from one location to another location over a data path (360) having n data lines (362) with one data line for each bit in an n-bit data byte, said method comprising the steps of:

(1) monitoring and continuously evaluating (366; 352, 367) the signal pattern on the n data lines (362) existing at each data byte transfer cycle time for the bit sequences for each n-bit byte of said predetermined sequences of n-bit bytes in each set of multi-byte sequences, said monitoring and evaluating (366; 352, 367) being performed without affecting the transfer of data on said data path (360) ; and,
(2) utilizing (370, 354) the result of at least two evaluations performed by said monitoring and evaluating means (366; 352, 367) at successive data byte transfer cycle times, and

generating (370) a status flag that is reset at the beginning of each transfer with the status of the flag representing the evaluation of the presence or absence of any of said predetermined sequences of n-bit bytes in each set of multi-byte sequences in the data stream.

13. The method of claim 12 wherein said evaluation includes comparing (367) the signal pattern on the n data lines (362) existing at each data byte transfer cycle time with previously stored reference signals (352) corresponding to the bit sequences for each n-bit byte of said predetermined sequences of n-bit bytes in each set of multi-byte sequences, said comparison being performed at least two successive data byte transfer cycle times and wherein the result of at least two of said comparisons is utilized.

14. The method of claim 12 wherein said evaluation includes decoding (366) the signal pattern on the n data lines (362) existing at each data byte transfer cycle time if said signal pattern corresponds to the bit sequences of n-bit bytes of said predetermined sequences of n-bit bytes in each set of multi-byte sequences and directing said decoded signal to said utilization means (370, 354).

15. The method of claim 12 further comprising the step of selectively performing the step of monitoring and evaluating (366; 352, 367) the signal pattern in response to a control signal (364).

16. The method of claim 12 wherein said data stream transfers data in blocks of data with each block having sequential segments of data bytes transferred one after the other.

17. The method of claim 12 wherein said data stream transfers data in blocks of data with each block having sequential segments of data bytes transferred one after the other and further comprising the steps of detecting the presence of a beginning portion of said predetermined sequences of n-bit bytes in a set of multi-byte sequences occurring at the end of one data block and detecting the presence of the remaining portion of the predetermined sequences of n-bit bytes in the set of multi-byte sequences occurring at the beginning of the next successive data block.

18. The method of claim 12 wherein said data comprises text and further comprising the step of evaluating (366; 352, 367) the data stream of text for the presence of predetermined sequences of n-bit bytes representing characters of text.

19. The method of claim 18 further comprising the step of evaluating (366; 352, 367) the data stream of text for text sequences of two characters in length.

20. The method of claim 19 further comprising the step of evaluating (366; 352, 367) the data stream of text for the two character text sequences of "%%", "%!", or "%?".

**Patentansprüche**

1. Vorrichtung zum Erkennen mindestens eines Satzes von Mehrbyte-Sequenzen in einem Datenstrom, wobei jeder Satz von Mehrbyte-Sequenzen vorbestimmte Sequenzen von n-Bit-Bytes aufweist, wobei der Datenstrom Daten von einem Ort zu einem anderen Ort über einen Datenweg (360) mit n Datenleitungen (362) mit einer Datenleitung für jedes Bit in einem n-Bit-Datenbyte überträgt, wobei die Vorrichtung folgendes umfaßt:

(a) Vorrichtungen zur Überwachung und kontinuierlichen Auswertung (366; 352, 367) des Signalmusters auf den n Datenleitungen (362), das zu jeder Datenbyte-Übertragungszykluszeit für die Bitsequenzen für jedes n-Bit-Byte der vorbestimmten Sequenzen von n-Bit-Bytes in jedem Satz von Mehrbyte-Sequenzen existiert, wobei die Überwachungs- und Auswertungsvorrichtungen (366; 352, 367) ohne Beeinflussung der Datenübertragung auf dem Datenweg (360) arbeiten; und

(b) Verwertungsvorrichtungen (370, 354), die auf das Ergebnis von mindestens zwei Auswertungen reagieren, die von den Überwachungs- und Auswertungsvorrichtungen (366; 352, 367) zu aufeinanderfolgenden Datenbyte-Übertragungszykluszeiten ausgeführt werden, wobei die Verwertungsvorrichtungen (370, 354) eine Vorrichtung zum Erzeugen (370) eines Statuskennzeichens, das am Anfang jeder Übertragung zurückgesetzt wird, umfassen, wobei der Status des Kennzeichens die Auswertung der Anwesenheit oder Abwesenheit von irgendeiner der vorbestimmten Sequenzen von n-Bit-Bytes in jedem Satz von Mehrbyte-Sequenzen in dem Datenstrom darstellt.

2. Vorrichtung nach Anspruch 1, wobei die Überwachungs- und Auswertungsvorrichtungen einen Vergleicher (367) umfassen.

3. Vorrichtung nach Anspruch 2, wobei der Vergleicher (367) das Signalmuster auf den n Datenleitungen (362), das zu jeder Datenbyte-Übertragungszykluszeit existiert, mit vorher gespeicherten Referenzsignalen (352), die den Bitsequenzen für jedes n-Bit-Byte der vorbestimmten Sequenzen von n-Bit-Bytes in jedem Satz von Mehrbyte-Sequenzen entsprechen, vergleicht, und wobei der Vergleicher (367) mindestens zwei Vergleiche zu aufeinanderfolgenden Datenbyte-Übertragungszykluszeiten ausführt und wobei die Verwertungsvorrichtungen (370, 354) auf das Ergebnis von mindestens zwei Vergleichen reagieren.

4. Vorrichtung nach Anspruch 1, wobei die Überwachungs- und Auswertungsvorrichtungen einen Decodierer (366) umfassen.

5. Vorrichtung nach Anspruch 4, wobei der Decodierer (366) das Signalmuster auf den n Datenleitungen (362), das zu jeder Datenbyte-Übertragungszykluszeit existiert, empfängt, und wenn das Signalmuster einer Bitsequenz von n-Bit-Byte der vorbestimmten Sequenzen von n-Bit-Bytes in jedem Satz von Mehrbyte-Sequenzen entspricht, der Decodierer (366) ein entsprechendes Signal für die Verwertungsvorrichtungen (370, 354) erzeugt.

6. Vorrichtung nach Anspruch 1, wobei der Datenweg n+1 Leitungen aufweist, wobei n Leitungen (368) zur Datenübertragung verwendet werden und die zusätzliche Leitung (364) eine Steuersignalleitung darstellt, wobei die Vorrichtung ferner eine Vorrichtung zur selektiven Aktivierung und Deaktivierung (520) der Überwachungs- und Auswertungsvorrichtungen (366; 352, 367) als Reaktion auf ein Steuersignal auf der Steuersignalleitung (364) umfaßt.

7. Vorrichtung nach Anspruch 1, wobei der Datenstrom die Daten in Datenblöcken überträgt, wobei jeder Block aufeinanderfolgende Segmente von Datenbytes aufweist, die nacheinander übertragen werden.

8. Vorrichtung nach Anspruch 1, wobei der Datenstrom die Daten in Datenblöcken überträgt, wobei jeder Block aufeinanderfolgende Segmente von Datenbytes aufweist, die nacheinander übertragen werden, wobei die Verwertungsvorrichtungen (370, 354) eine Vorrichtung zum Auffinden der Anwesenheit eines Anfangsteils der vorbestimmten Sequenzen von n-Bit-Bytes in einem Satz von Mehrbyte-Sequenzen, der am Ende eines Datenblocks auftritt, und der Anwesenheit des restlichen Teils der vorbestimmten Sequenzen von n-Bit-Bytes in dem Satz von Mehrbyte-Sequenzen, der am Anfang des nächstfolgenden Datenblocks auftritt, umfassen.

9. Vorrichtung nach Anspruch 1, wobei die Daten Text umfassen und wobei die Überwachungs- und Auswertungsvorrichtungen (366; 352, 367) den Textdatenstrom hinsichtlich der Anwesenheit von vorbestimmten Sequenzen von n-Bit-Bytes, die Textzeichen darstellen, auswerten.

10. Vorrichtung nach Anspruch 9, wobei die Überwachungs- und Auswertungsvorrichtungen (366; 352, 367) den Textdatenstrom hinsichtlich Textsequenzen mit einer Länge von zwei Zeichen auswerten.

11. Vorrichtung nach Anspruch 10, wobei die Überwachungs- und Auswertungsvorrichtungen (366; 352, 367) den Textdatenstrom hinsichtlich der Text sequenzen aus zwei Zeichen von "%%", "%!" oder "%?" auswerten.

12. Verfahren zum Erkennen mindestens eines Satzes von Mehrbyte-Sequenzen in einem Datenstrom, wobei jeder Satz von Mehrbyte-Sequenzen vorbestimmte Sequenzen von n-Bit-Bytes aufweist, wobei der Datenstrom Daten von einem Ort zu einem anderen Ort über einen Datenweg (360) mit n Datenleitungen (362) mit einer Datenleitung für jedes Bit in einem n-Bit-Datenbyte überträgt, wobei das Verfahren die folgenden Schritte umfaßt:

(1) Überwachung und kontinuierliche Auswertung (366; 352, 367) des Signalmusters auf den n Datenleitungen (362), das zu jeder Datenbyte-Übertragungszykluszeit für die Bitsequenzen für jedes n-Bit-Byte der vorbestimmten Sequenzen von n-Bit-Bytes in jedem Satz von Mehrbyte-Sequenzen existiert, wobei die Überwachung und Auswertung (366; 352, 367) ohne Beeinflussung der Datenübertragung auf dem Datenweg (360) ausgeführt wird; und
(2) Verwerten (370, 354) des Ergebnisses von mindestens zwei Auswertungen, die von den Überwachungs- und Auswertungsvorrichtungen (366; 352, 367) zu aufeinanderfolgenden Datenbyte-Übertragungszykluszeiten ausgeführt werden, und
Erzeugen (370) eines Statuskennzeichens, das am Anfang jeder Übertragung zurückgesetzt wird, wobei der Status des Kennzeichens die Auswertung der Anwesenheit oder Abwesenheit von irgendeiner der vorbestimmten Sequenzen von n-Bit-Bytes in jedem Satz von Mehrbyte-Sequenzen in dem Datenstrom darstellt.

13. Verfahren nach Anspruch 12, wobei die Auswertung das Vergleichen (367) des Signalmusters auf den n Datenleitungen (362), das zu jeder Datenbyte-Übertragungszykluszeit existiert, mit vorher gespeicherten Referenzsignalen (352), die den Bitsequenzen für jedes n-Bit-Byte der vorbestimmten Sequenzen von n-Bit-Bytes in jedem Satz von Mehrbyte-Sequenzen entsprechen, umfaßt, wobei der Vergleich zu mindestens zwei aufeinanderfolgenden Datenbyte-Übertragungszykluszeiten ausgeführt wird und wobei das Ergebnis von mindestens zwei der Vergleiche verwertet wird.

14. Verfahren nach Anspruch 12, wobei die Auswertung die Decodierung (366) des Signalmusters auf den n Datenleitungen (362), das zu jeder Datenbyte-Übertragungszykluszeit existiert, wenn das Signalmuster den Bitsequenzen von n-Bit-Bytes der vorbestimmten Sequenzen von n-Bit-Bytes in jedem Satz von Mehrbyte-Sequenzen entspricht, und das Leiten des decodierten Signals zu der Verwertungsvorrichtung (370, 354) umfaßt.

15. Verfahren nach Anspruch 12, das ferner den Schritt der selektiven Ausführung des Schritts der Überwachung und Auswertung (366; 352, 367) des Signalmusters als Reaktion auf ein Steuersignal (364) umfaßt.

16. Verfahren nach Anspruch 12, wobei der Datenstrom die Daten in Datenblöcken überträgt, wobei jeder Block aufeinanderfolgende Segmente von Datenbytes aufweist, die nacheinander übertragen werden.

17. Verfahren nach Anspruch 12, wobei der Datenstrom die Daten in Datenblöcken überträgt, wobei jeder Block aufeinanderfolgende Segmente von Datenbytes aufweist, die nacheinander übertragen werden, und das ferner die Schritte des Auffindens der Anwesenheit eines Anfangsteils der vorbestimmten Sequenzen von n-Bit-Bytes in einem Satz von Mehrbyte-Sequenzen, der am Ende eines Datenblocks auftritt, und des Auffindens der Anwesenheit des restlichen Teils der vorbestimmten Sequenzen von n-Bit-Bytes in dem Satz von Mehrbyte-Sequenzen, der am Anfang des nächstfolgenden Datenblocks auftritt, umfaßt.

18. Verfahren nach Anspruch 12, wobei die Daten Text umfassen, und das ferner den Schritt der Auswertung (366; 352, 367) des Textdatenstroms hinsichtlich der Anwesenheit von vorbestimmten Sequenzen von n-Bit-Bytes, die Textzeichen darstellen, umfaßt.

19. Verfahren nach Anspruch 18, das ferner den Schritt der Auswertung (366; 352, 367) des Textdatenstroms hinsichtlich Textsequenzen mit einer Länge von zwei Zeichen umfaßt.

20. Verfahren nach Anspruch 19, das ferner den Schritt der Auswertung (366; 352, 367) des Textdatenstroms hinsichtlich der Textsequenzen aus zwei Zeichen von "%%", "%!" oder "%?" umfaßt.

**Revendications**

1. Un dispositif de détection d'au moins jeu de séquences multibyte dans une suite de données, dont chaque jeu de séquences multibyte possède des séquences prédéterminées de bytes à n bits, ladite suite de données transférant des données d'un endroit à un autre endroit par un itinéraire de données (360) possédant n lignes de données (362) avec une ligne de données pour chaque bit dans un byte de données à n bits, ledit dispositif comprenant :

(a) des moyens de surveillance et d'évaluation continuelle (366; 352, 367) de la configuration de signaux sur les n lignes de données (362) existant à chaque temps de cycle de transfert de byte de données pour les séquences de bits pour chaque byte à n bits desdites séquences prédéterminées de bytes à n bits dans chaque jeu de séquences multibyte, lesdits moyens de surveillance et d'évaluation (366; 352, 367) opérant sans affecter le transfert de données sur ledit itinéraire de données (360); et, (b) des moyens d'utilisation (370, 354) répondant à au moins deux évaluations effectuées par lesdits moyens de surveillance et d'évaluation (366; 352, 367) à des temps de cycle de transfert de bytes de données successifs, lesdits moyens d'utilisation (370, 354) comprenant un moyen de génération (370) d'indicateur d'état qui est rétabli au début de chaque transfert à l'état de l'indicateur représentant l'évaluation de la présence ou l'absence d'une desdites séquences prédéterminées de bytes à n bits dans chaque jeu de séquences multibyte de la suite de données.

2. Le dispositif de la revendication 1 pour lequel les moyens de surveillance et d'évaluation contiennent un comparateur (367).

3. Le dispositif de la revendication 2 pour lequel ledit comparateur (367) compare les configurations de signaux sur les n lignes de données (362) existant à chaque temps de cycle de transfert de byte de données avec les signaux de référence mémorisés préalablement (352) correspondant aux séquences de bits pour chaque byte à n bits desdites séquences prédéterminées de bytes à n bits dans chaque jeu de séquences multibyte et pour lequel ledit comparateur (367) effectue au moins deux comparaisons à des temps de cycle de transfert de byte de données successifs et pour lequel ledit moyen d'utilisation (370, 354) répond au résultat d'au moins deux comparaisons.

4. Le dispositif de la revendication 1 pour lequel lesdits moyens de surveillance et d'évaluation contiennent un décodeur (366).

5. Le dispositif de la revendication 4 pour lequel ledit décodeur (366) reçoit sur les n lignes de données (362) la configuration de signaux apparaissant à chaque temps de cycle de transfert de byte de données, et si ladite configuration de signaux correspond à une séquence de bits de byte à n bits de ladite séquence prédéterminée de byte à n bits dans chaque jeu de séquences multibyte, ledit décodeur (366) génère un signal correspondant audits moyens d'utilisation (370, 354).

6. Le dispositif de la revendication 1 pour lequel ledit itinéraire de données possède n+1 lignes avec n lignes (368) utilisées pour le transfert de données et où la ligne supplémentaire (364) comprend une ligne de signal de contrôle, ledit dispositif comprend en outre des moyens pour activer et désactiver sélectivement (520) lesdits moyens de surveillance et d'évaluation (366; 352, 367) répondant à un signal de contrôle sur ladite ligne de signaux de contrôle (364).

7. Le dispositif de la revendication 1 pour lequel ladite suite de données transfert des données en blocs de données avec chaque bloc ayant des segments séquentiels de bytes de données transférés les uns après les autres.

8. Le dispositif de la revendication 1 pour lequel ladite suite de données transfert des données en blocs de données avec chaque bloc ayant des segments séquentiels de bytes de données transférés les uns après les autres, lesdits moyens d'utilisation (370, 354) comprenant des moyens d'identification de la présence d'une portion de départ desdites séquences prédéterminées de bytes à n bit dans un jeu de séquences multibyte apparaissant à la fin d'un bloc de données et de la présence de la portion restante des séquences prédéterminées de bytes à n bits dans le jeu de séquences multibyte apparaissant au début du bloc de données suivant successif.

9. Le dispositif de la revendication 1 pour lequel lesdites données comprennent un texte et pour lequel lesdits moyens de surveillance et d'évaluation (366; 352, 367) évaluent la suite de données du texte à la recherche de présence de séquences prédéterminées de bytes à n bits représentant les caractères du texte.

10. Le dispositif de la revendication 9 pour lequel lesdits moyens de surveillance et d'évaluation (366; 352, 367) évaluent la suite de données du texte pour des séquences de texte d'une longueur de deux caractères.

11. Le dispositif de la revendication 10 pour lequel lesdits moyens de surveillance et d'évaluation (366; 352, 367) évaluent la suite de données du texte pour des séquences de texte à deux caractères "%%", "%!" ou "%?".

12. Un procédé de détection d'au moins un jeu de séquences multibyte dans une suite de données, dont chaque jeu de séquences multibyte possède des séquences prédéterminées de bytes à n bits, ladite suite de données transférant des données d'un endroit à un autre endroit par un itinéraire de données (360) possédant n lignes de données (362) avec une ligne de données pour chaque bit dans un byte de données à n bits, ledit procédé comprenant les étapes de :

(1) surveillance et évaluation continuelle (366; 352, 367) de la configuration de signaux sur les n lignes de données (362) existant à chaque temps de cycle de transfert de byte de données pour les séquences de bits pour chaque byte à n bits desdites séquences prédéterminées de bytes à n bits dans chaque jeu de séquences multibyte, lesdites surveillance et évaluation (366; 352, 367) étant effectuées sans affecter le transfert de données sur ledit itinéraire de données (360); et,

(2) utilisation (370, 354) des résultats d'au moins deux évaluations effectuées par lesdits moyens de surveillance et d'évaluation (366; 352, 367) à des temps de cycle de transfert de bytes de données successifs et, générant (370) un indicateur d'état qui est rétabli au début de chaque transfert à l'état de l'indicateur représentant l'évaluation de la présence ou l'absence d'une desdites séquences prédéterminées de bytes à n bits dans chaque jeu de séquences multibyte de la suite de données.

13. Le procédé de la revendication 12 pour lequel ladite évaluation comprend la comparaison (367) de la configuration de signaux sur les n lignes de données (362) apparaissant à chaque temps de cycle de transfert de byte de données avec les signaux de référence mémorisés préalablement (352) correspondant aux séquences de bits pour chaque byte à n bits desdites séquences prédéterminées de bytes à n bits dans chaque jeu de séquences multibyte, ladite comparaison étant effectuée au moins à deux temps de cycle de transfert de byte de données successifs et pour lequel le résultat d'au moins deux comparaisons est utilisé.

14. Le procédé de la revendication 12 pour lequel ladite évaluation comprend un décodage (366) sur les n lignes de données (362) de la configuration de signaux apparaissant à chaque temps de cycle de transfert de byte de données, et si ladite configuration de signaux correspond à une séquence de bits de byte à n bits de ladite séquence prédéterminée de byte à n bits dans chaque jeu de séquences multibyte, ledit décodeur (366) génère un signal correspondant audits moyens d'utilisation (370, 354).

15. Le procédé de la revendication 12 comprend en outre les étapes d'exécution sélective des étapes de surveillance et d'évaluation (366; 352, 367) de la configuration de signaux en réponse à un signal de contrôle (364).

16. Le procédé de la revendication 12 pour lequel ladite suite de données transfère des données en blocs de données avec chaque blocs ayant des segments séquentiels de bytes de données transférés les uns après les autres.

17. Le procédé de la revendication 12 pour lequel ladite suite de données transfère des données en blocs de données avec chaque bloc ayant des segments séquentiels de bytes de données transférés les uns après les autres et comprenant en outre les étapes d'identification de la présence d'une portion de départ desdites séquences prédéterminées de bytes à n bit dans un jeu de séquences multibyte apparaissant à la fin d'un bloc de données et identifiant la présence de la portion restante des séquences prédéterminées de bytes à n bits dans le jeu de séquences multibyte apparaissant au début du bloc de données suivant successif.

18. Le procédé de la revendication 12 pour lequel lesdites données comprennent un texte et comprennent en outre les étapes d'évaluation (366; 352, 367) de la suite de données du texte à la recherche de la présence de séquences prédéterminées de bytes à n bits représentant les caractères du texte.

19. Le procédé de la revendication 18 comprend en outre les étapes d'évaluation (366; 352, 367) de la suite de données du texte pour des séquences de texte d'une longueur de deux caractères.

20. Le procédé de la revendication 19 comprend en outre les étapes d'évaluation (366; 352, 367) de la suite de données du texte pour les séquences de texte à deux caractères "%%", "%!" ou "%?".

104

102

110

112

New data /
erase data

Shift Register 4,096 x 6 bits

Character
Code
Comparator

Character
Sequence
Logic

Data In

Data Readout

106

108

*PRIOR ART*

**FIGURE 1**

110

Character Decoder

206

Z

TTL
Logic Levels

Current
Character

:
:
:

204

A

EM

LF

208

RET detected

RET

202

*PRIOR ART*

**FIGURE 2a**

208
RET detected

220
D Q

CLOCK

222

112

LF detected

224

226

228

AND

Line End
Detected

PRIOR ART

**FIGURE 2b**

208
RET detected

220
D Q

CLOCK

222

240
D Q

CLOCK

242

112

224
LF detected

244
D Q

CLOCK

242

248

250

AND

Paragraph end
detected

EM detected

246

PRIOR ART

**FIGURE 2c**

**FIGURE 3A**

**FIGURE 3B**

**FIGURE 4A**

350

352 367 370 354

Status Register

| Reference Signals | "%" → | Character Comparator | "%" → | Status Logic Circuit | | | | |
|---|---|---|---|---|---|---|---|---|
| | "!" → | | "!" → | | | | | |
| | "?" → | | "?" → | | | | | |

| 4 | 3 | 2 | 1 |
|---|---|---|---|

Control Line

364

data lines (8-bit bytes)

362

368

360

**FIGURE 4B**

FIGURE 5

EP 0 601 304 B1

Start

Transfer Next Buffer
Wait until complete or
process another task — 610

Examine status
register — 620

624 — Bits 1,2 and/or 3
set? → No

Yes

630 — "%%", "%!" and/or
"%?" detected

640 — Scan entire buffer
to examine context

650 — Process structuring
comments

660 — Done with this buffer
Reset bits 1,2,3

670 — More data to transfer?

Yes

No

Done

**FIGURE 6**

**FIGURE 7**